# EUROPÄISCHE PATENTSCHRIFT

(11) **EP 2 115 412 B1**
(45) Veröffentlichungstag und Bekanntmachung des Hinweises auf die Patenterteilung: **25.09.2013**
(21) Anmeldenummer: 08706795.5
(22) Anmeldetag: 24.01.2008
(51) Int. Cl.: B63H 23/24, F16D 1/033, F16D 3/74, G01L 3/10

(54) **VERFAHREN UND VORRICHTUNG ZUM ÜBERWACHEN EINES EINE HOCHELASTISCHE KUPPLUNG AUFWEISENDEN ANTRIEBSSTRANGS**
METHOD AND DEVICE FOR MONITORING A DRIVE TRAIN HAVING A HIGHLY FLEXIBLE COUPLING
PROCÉDÉ ET DISPOSITIF POUR SURVEILLER UNE CHAÎNE CINÉMATIQUE PRÉSENTANT UN ACCOUPLEMENT TRÈS ÉLASTIQUE

(30) Priorität: 25.01.2007 DE 102007003867
(43) Veröffentlichungstag der Anmeldung: 11.11.2009
(73) Patentinhaber: Prüftechnik Dieter Busch AG, 85737 Ismaning (DE)
(72) Erfinder: BECKER, Edwin, 48734 Reken (DE)
(74) Vertreter: Schorer, Reinhard
(86) Internationale Anmeldenummer: PCT/DE2008/000127
(87) Internationale Veröffentlichungsnummer: WO 2008/089742

(56) Entgegenhaltungen:
- EP-A- 1 524 433
- DE-A1- 19 621 185
- DE-A1-102006 015 867
- DE-U1-202004 003 522

## Beschreibung

Die vorliegende Erfindung betrifft ein Verfahren und eine Vorrichtung zum Überwachen eines Antriebsstrangs mit zwei durch eine hochelastische Kupplung verbundenen Wellenabschnitten.

Kupplungen sind Maschinenelemente zur drehfesten Verbindung von Antriebs- und Arbeitsmaschinen. Dreh- und biegenachgiebige Kupplungen sind in der Lage, neben den radialen, axialen und winkeligen Verlagerungen der Wellen der Antriebs- und Arbeitsmaschinenkomponenten auch Verlagerungen in Drehrichtung zuzulassen und Stöße, Schwingungen usw. zu bedämpfen. Allerdings ist es hier notwendig, die Federcharakteristik und Dämpfung des drehelastischen Teils der Kupplung sorgfältig auf den speziellen Einsatzfall abzustimmen, um nicht den gegenteiligen Effekt zu erzielen.

In hochelastischen Kupplungen verwendet man oft Elastomerwerkstoffe, die zwar noch drehnachgiebiger und weicher sind, jedoch im Gegensatz zu metallischen Werkstoffen sowohl in physikalischer als auch in chemischer Sicht Beeinflussbarkeiten zeigen, die zu vorzeitigen Kupplungsausfällen führen können. Es entsteht deshalb mit zunehmender Baugröße Bedarf an Verfahren zur Zustandsüberwachung der Kupplungen selbst.

Hochelastische Elastomerkupplungen sind teuer und dürfen nur bestimmungsgemäß betrieben werden. Nach DIN 740 ist es erforderlich, die Kupplung im Antriebsstrang hinsichtlich statischer, harmonischer, periodischer und nicht-periodischer Beanspruchungen zu dimensionieren und anschließend auch nur so zu betreiben.

Im Schiffbau sind Elastomerkupplungen meist in Antriebssträngen mit Verbrennungskraftmaschinen weit verbreitet. Komplexe Maschinen und hochdynamische Umrichter erfordern neuerdings auch den Einsatz von hochelastischen Kupplungen (bis hin zur Windbranche). Denn schließlich gelingt es bei diesen Kupplungen mit den "nachgiebigen" Elastomerelementen besonders gut, Drehschwingungen und Zusatzlasten zu bedämpfen, Eigenfrequenzen zu verschieben oder mehrere dieser Wirkungen zu erzielen.

Ausdruck dessen ist auch, dass viel Geld in neue Großkupplungsprüfstände und Sondermesstechniken investiert werden, um mehr über die Dimensionierung von Elastomerkupplungen erforschen zu können (siehe Z. Konstruktion 6/2006, S. 58-59)

In der US 4,020,685 ist eine Drehmomentmeßvorrichtung beschrieben, wobei ein antriebsseitiger Wellenabschnitt und ein abtriebsseitiger Wellenabschnitt mittels eines torsionselastischen Abschnitts verbunden sind, wobei antriebsseitig und abtriebsseitig jeweils ein Zahnrad aus magnetischem Material mit zugehörigem magnetischem Sensor vorgesehen ist, um die Phasenverschiebung zwischen der Drehung der Antriebswelle und der Abtriebswelle zu erfassen, um das wirkende Drehmoment zu ermitteln, wobei die Sensoren in radialer Richtung angeordnet sind. Ähnliche Vorrichtungen sind in der JP 2001066201 A und in der US 3,982,419 beschrieben. Bei alle diesen Vorrichtungen werden die Sensoren als Inkrementalgeber verwendet, wobei das Signal nach einer geeigneten Signalaufbereitung beispielsweise in eine Rechteckspannung überführt und als Impulsbreiten/Periodendauermessung über Zählschaltungen ausgewertet wird. In der DE 10 2004 039 140 B4 sind Verfahren zur verbesserten Auswertung von solchen Inkrementalgebersignalen, beispielsweise mittels Signalanpassung über Schmitt-Trigger, beschrieben.

Aus der DE 101 00 776 A1 ist ein Verfahren zu Bestimmung des auf eine Schiffsantriebswelle wirkenden Drehmoments bekannt, wobei in axialer Richtung versetzt angeordnete und in radialer Richtung messende magnetoresistive Sensoren verwendet werden, um die durch das auf die Welle wirkende Drehmoment erzeugte Verdrehung der Welle zwischen den Meßpunkten anhand der Lageänderung der auf der Welle erzeugten Magnetfeldlinien zu erfassen, wobei die analogen Meßsignalverläufe ohne Inkrementalgeberfunktion ausgewertet werden.

Aus der DE 101 43 844 A1 ist ein Verfahren zur Überwachung von Kupplungen an Schiffsantrieben bekannt, wobei die Kupplung elastisch ausgebildet ist und mittels in radialer Richtung an den Kupplungsflanschen angeordneten induktiven Näherungssensoren die radiale Verlagerung der beiden Kupplungsflansche zueinander erfaßt wird.

In der DE10 2006 015 867 A1 ist ein Verfahren und eine Vorrichtung gemäß dem Oberbegriff von Anspruch 1 bzw. 28 zur Überprïfung eines Drehschwingungsdämpfers beschrieben. In der DE 196 21 185 A1 ist eine Vorrichtung zur Durchführung einer Drehmomentmessung an Werkzeugspindeln mittels berührungsloser Wegaufnehmer beschrieben.

Es ist Aufgabe der vorliegenden Erfindung, ein Verfahren und eine Vorrichtung zum Überwachen eines mindestens eine hochelastische Kupplung aufweisenden Antriebsstrangs zu schaffen, wobei in kostengünstiger Weise eine möglichst aussagekräftige Überwachungsfunktion realisiert werden soll.

Diese Aufgabe wird erfindungsgemäß gelöst durch ein Verfahren gemäß Anspruch 1 bzw. eine Vorrichtung gemäß Anspruch 28. Bei dieser Lösung ist vorteilhaft, dass dadurch, dass jeweils mittels mindestens eines induktiven oder elektromagnetischen Wegsensors der zeitliche Verlauf des Abstands zwischen dem jeweiligen Sensor und mindestens einem Markierungselement an jeder Seite der Kupplung vorzugsweise permanent erfaßt wird und daraus der zeitliche Verlauf des Verdrehwinkels zwischen den Wellenabschnitten ermittelt wird, in relativ kostengünstiger und einfacher Weise eine präzise und weitreichende Überwachung des Antriebsstrangs realisiert werden kann. Insbesondere lassen sich auf relativ einfache Weise umfassende Informationen sowohl bezüglich des Zustands der Kupplung als auch der übrigen Elemente des Antriebsstrangs ableiten. Dabei können folgende Beurteilungskriterien herangezogen werden: statische Drehverformungen der Kupplung selbst, dynamische Drehverformungen der Kupplung selbst, stationäre Verformungen durch den Antriebsstrang, instationäre Verformungen durch die Maschine oder das Aggregat, dynamische Drehschwingungen, Eigenfrequenzanregungen sowie das Auftreten von Wechselamplituden.

Hochelastische Kupplungen sind in Antriebssträngen wegen ihres empfindlichen Verformungs-, Verlagerungs- und Drehwinkelverhaltens ein hervorragender Informationsträger, um eine Zustandsüberwachung an der Kupplung selbst bzw. an den Maschinen und Anlagen des Antriebsstrangs z.B. in betriebskritischen Anwendungen zu betreiben. So soll beispielsweise erkannt werden, wenn sich mittels der hochelastischen Kupplung Drehschwingungen nicht mehr ausreichend bedämpfen lassen oder sich Eigenfrequenzen verschieben.

Durch die vorzugsweise permanente Erfassung des Zeitverlaufs des Abstandssignals können im Vergleich zur Verwendung von Inkrementalgebern wesentlich umfassendere Informationen über den Zustand des Antriebsstrangs gewonnen werden, so dass die Auswertung entsprechend aussagekräftiger gestaltet werden kann. Die Verwendung von induktiven oder elektromagnetischen Wegsensoren gewährleistet die erforderliche Genauigkeit auch bei hohen Drehzahlen (dies ist beispielsweise bei magnetoresistiven Sensoren ein Problem) bei relativ niedrigen Kosten (andere Verfahren, wie licht-optische Verfahren wie Interferometer oder hochgenaue Zeitmeßverfahren oder Wirbelstromsensoren, sind wesentlich kostspieliger). Vorzugsweise weisen die Wegsensoren einen Arbeitsbereich von mindestens 10 mm auf.

Vorzugsweise sind die Wegsensoren angeordnet, um den Abstand zwischen dem Sensor und den jeweiligen Markierungselement in axialer Richtung zu erfassen. Dabei sind die Markierungselemente vorzugsweise ringförmig angeordnet. Es kann sich beispielsweise bei den Markierungselementen um die Köpfe von axial angeordneten metallischen Verbindungselementen, typischerweise Schrauben, zwischen dem jeweiligen Wellenabschnitt und der Kupplung handeln, wobei die Wellenabschnitte und die Kupplung typischerweise mittels entsprechender Flansche miteinander verbunden sind.

Bei dem Antriebsstrang kann es sich beispielsweise um einen Teil eines Schiffsantriebs oder einer Windkraftanlage handeln.

Weiter bevorzugte Ausführungsformen der Erfindung ergeben sich aus den Unteransprüchen.

Im folgenden wird die Erfindung beispielhaft anhand der beigefügten Zeichnungen näher erläutert. Dabei zeigen:
- Fig. 1: eine schematische Seitenansicht eines Antriebsstrangs mit zugehöriger Meßvorrichtung zur Ausführung des erfindungsgemäßen Verfahrens;
- Fig. 2: eine Ansicht in axialer Richtung eines der Kupplungsflansche von Fig. 1; und
- Fign. 3 bis 7: beispielhafte Meßverläufe verschiedener Signale.

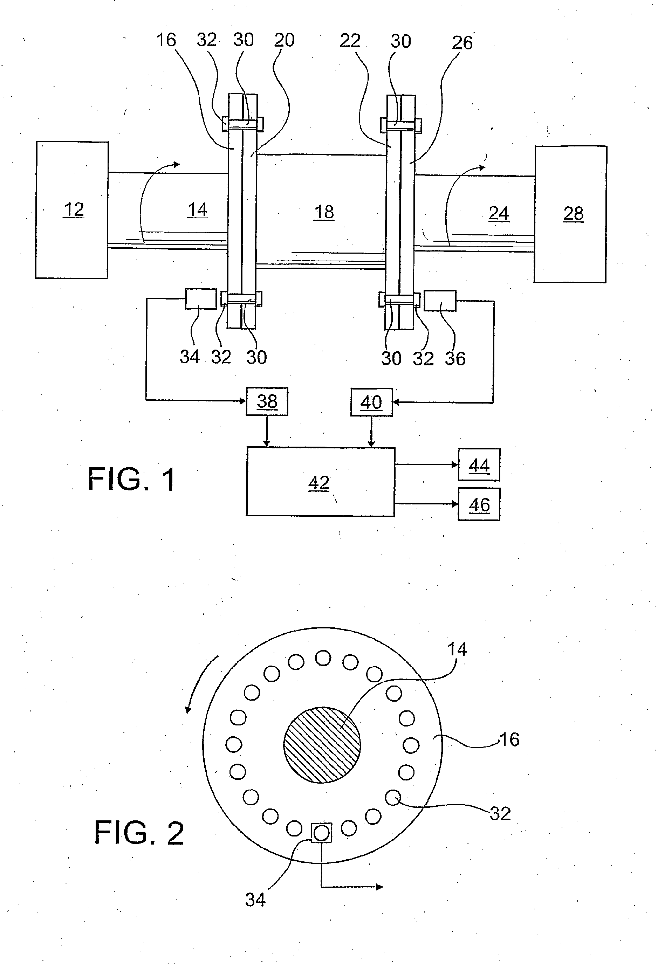

In Fig. 1 ist eine schematische Ansicht eines Antriebsstrangs 10 gezeigt, der eine Antriebsmaschine 12, z.B. einen Motor, einen antriebsseitigen Wellenabschnitt 14 mit einem Flansch 16, eine hochelastische Kupplung 18 mit einem antriebsseitigem Flansch 20 und einen abtriebsseitigen Flansch 22, einem abtriebsseitigen Wellenabschnitt 24 mit einem Flansch 26 sowie eine angetriebene Last (Arbeitsmaschine) aufweist. Der Antriebsstrang 10 kann beispielsweise Teil eines Schiffsantriebs sein, wobei die Antriebsmaschine 12 dann typischerweise als Dieselmotor und die Last 28 als Propeller ausgebildet ist. Der Antriebsstrang 10 könnte jedoch beispielsweise auch Teil einer Windkraftanlage sein, wobei dann die Antriebsmaschine 12 von den Rotorblättern und die Last 28 von einem Generator mit Getriebe gebildet würde.

Die Flansche 16 und 20 bzw. 22 und 26 dienen dazu, die Wellenabschnitte 14 und 24 mittels der Kupplung 18 drehelastisch miteinander zu verbinden. Die Flansche 16 und 20 bzw. 22 und 26 sind jeweils mittels ringförmig angeordneter Verbindungselemente 30 fest miteinander verbunden, bei denen es sich typischerweise um Schrauben handelt, die sich in axialer Richtung erstrecken und an beiden Enden einen Kopf 32 aufweisen. Es versteht sich, dass die Kupplung 18 grundsätzlich auch mehrteilig, d.h. aus mehreren beispielsweise mittels Flanschen miteinander verbundenen axialen Elastomer-Abschnitten bestehend, ausgebildet sein kann. Grundsätzlich kann der Antriebsstrang auch mehrere hochelastische Kupplungen in der Art der Kupplung 18 aufweisen. Die Kupplung 18 ist typischerweise aus einem Elastomermaterial gefertigt.

An dem antriebsseitigen Ende und dem abtriebsseitigen Ende der Kupplung 18 oder in der Nähe dazu ist jeweils ein induktiver oder elektromagnetischer Wegsensor 34 bzw. 36 vorgesehen, um den zeitlichen Verlauf des Abstands zwischen dem jeweiligen Sensor 34, 36 und mindestens einem mit der jeweiligen Seite der Kupplung verbundenen Markierungselement zu erfassen. In dem Beispiel von Fig. 1 und 2 dienen die Köpfe 32 der Schrauben 30 am Flansch 16 bzw. 26 als solche Markierungselemente. Die Sensoren 34, 36 sind dabei so angeordnet, dass sie den Abstand in axialer Richtung erfassen, wobei bei einer Drehung des Antriebsstrangs 10 um 360° jeder der Schraubenköpfe 32 einmal an dem Sensor 34, 36 vorbei wandert. In der Regel wird das Vorsehen eines einzelnen Sensors 34, 36 auf jeder Kupplungsseite ausreichend sein. Zur Erhöhung der Genauigkeit bzw. Zeitauflösung könnten jedoch auch mehrere in Umfangsrichtung verteilte Sensoren vorgesehen sein. 'Selbstverständlich sind nicht nur Schraubenköpfe als erfindungsgemäße Markierungselemente zu verstehen. Es kann sich bei diesen Markierungselementen auch um andere, z.B in die Kupplung beim Guß eingebrachte Teile handeln, die von den Sensoren 34, 36 detektiert werden können'. Vorzugsweise weisen die Sensoren 34, 36 einen Meßarbeitsbereich von mindestens 10 mm auf, wobei die Empfindlichkeit für Frequenzen bis 1 kHz immer noch im Bereich von einigen µm liegt.

Das von den Sensoren 34 bzw. 36 erfaßte Abstandssignal durchläuft zunächst jeweils eine Signalbearbeitungseinheit 38 bzw. 40, worin das Meßsignal beispielsweise verstärkt, vorverarbeitet und spektral gefiltert wird, bevor die bearbeiteten Signale einer Signalauswertungseinheit 42 zugeführt werden, die optional als weiteren Input den monentanen Wert des an der Antriebsmaschine 12 gemessenen Lastdrehmoments erhält, welches auch auf die Kupplung 18 wirkt. Die Auswerteeinheit 42 dient dazu, den mittels der Sensoren 34 und 36 an beiden Kupplungsseiten erfaßten zeitlichen Verlauf des Abstandssignals auszuwerten und zu vergleichen, um daraus den zeitlichen Verlauf des Verdrehwinkels zwischen den Kupplungsseiten, d.h. den Flanschen 20 und 22, - und damit des Verdrehwinkels zwischen den Wellenabschnitten 14 und 24 - zu erfassen, um auf diese Weise den Zustand des Antriebsstrangs 10 zu überwachen. Die Auswerteeinheit 42 dient dabei dazu, aus den von den Sensoren 34 und 36 erfaßten Abstandssignalen möglichst umfassende Informationen bezüglich des Zustands des Antriebsstrangs 10, d.h. insbesondere bzgl. der Kupplung 18, der Antriebsmaschine 12, der Last 28 und den Wellenabschnitten 14 und 24 zu erhalten. Besonders wichtig ist es dabei, ein drohendes Versagen der Kupplung 18 rechtzeitig zu erkennen.

Zusätzlich zu der Ermittlung bzw. Auswertung des zeitlichen Verlaufs des Verdrehwinkels der Kupplung 18 können zusätzlich andere Parameter ermittelt bzw. herangezogen werden, z.B. die Drehzahl der Kupplung 18 und deren zeitlicher Verlauf, die Kupplungssteifigkeit und deren zeitlicher Verlauf, axiale Verlagerungen der Kupplung, Integrität der mechanischen Verbindung zwischen der Kupplung 18 und den Wellenabschnitten 14, 24, etc. Durch die vernetzte Auswertung der Daten der anderer Sensoren, wie z.B. des an modernen Motoren vorhandenen Sensors zur Winkelstellung der Kurbelwelle, werden auch Aussagen über andere Maschinenteile, wie in diesem Fall die Motorwelle, möglich.

Die Ergebnisse der Signalauswertung in der Auswerteeinheit 42 können beispielsweise auf einer Anzeigeeinrichtung 44 grafisch und in Textform dargestellt werden und/oder bei Erkennen eines unzulässigen Betriebszustands als optisches und/oder akustisches Alarmsignal mittels einer Alarmeinheit 46 ausgegeben werden.

Das System kann beispielsweise so ausgebildet sein, dass bei Inbetriebnahme die Anzahl der Schraubenköpfe 32 und die zugehörigen Durchmesser einzugeben sind. Dabei ist vorab abzuschätzen, ob und inwieweit die erwarteten Drehwinkelschwankungen die Schraubenzeitfolgen überschreiten können. Mit dem System werden die zeitlichen Verläufe des Abstandssignals auf beiden Kupplungsseiten zeitgleich und hochauflösend erfaßt, die Signale werden dann nachbearbeitet und schließlich hinsichtlich unterschiedlicher Bewertungskriterien einzeln und im Vergleich zueinander ausgewertet.

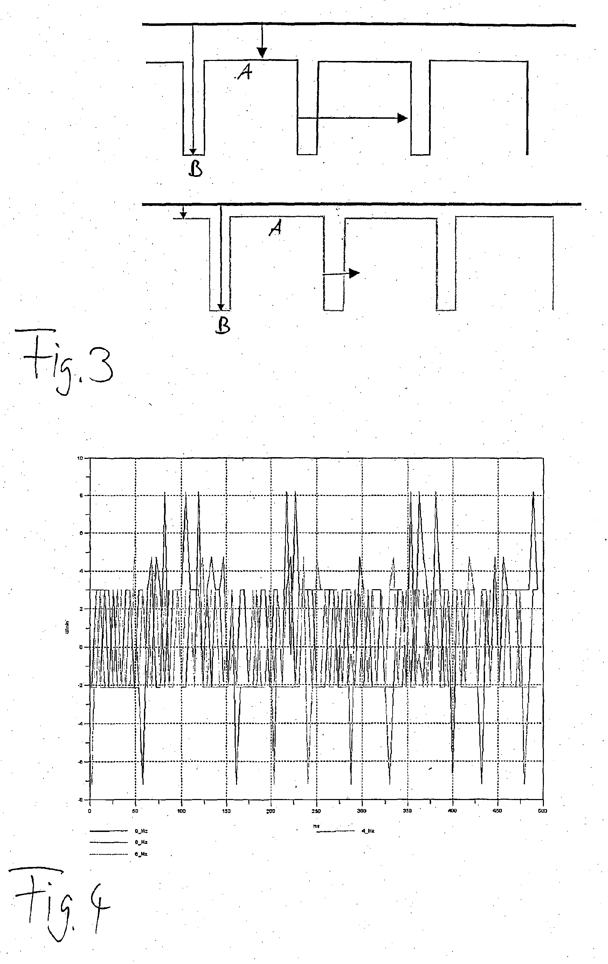

In Fig. 3 ist beispielhaft jeweils ein zeitlicher Verlauf des Abstandssignals des Sensors 34 bzw. 36 gezeigt. In Fig. 3 ist dabei mit zunehmendem Abstand von oben nach unten aufgetragen. Die Bereiche A minimalen Abstands entsprechen dabei dem Durchgang von je einem Schraubenkopf 32, während die Bereiche B maximalen Abstands jeweils zwischen zwei Schraubenköpfen 32 liegen und das Signal in diesen Bereichen entsprechend ein Maß für den Abstand des Flanschs 16 bzw. 26 vom Sensor 34 bzw.36 an dieser Stelle ist. Die Signale der beiden Kupplungsseiten weisen typischerweise einen Phasenversatz auf, der aufgrund der Drehelastizität der Kupplung 18 mit zunehmenden Drehmoment zunimmt. Wenn die Sensoren 34, 36 bei der Installation "phasengleich" montiert werden, d.h. so montiert werden, dass ohne Drehmomentbelastung keine Phasenverschiebung zwischen den beiden Seiten vorliegt, erspart man sich die Korrektur des Meßsignals bezüglich des Stillstandversatzes.

Die Meßsignale werden in der Auswerteeinheit 42 vorzugsweise sowohl im Zeitbereich als auch im Frequenzbereich, d.h. spektral ausgewertet.

Zunächst seien Beispiele für Informationen dargelegt, die mittels einkanaliger Signalauswertung, d.h. bei getrennter Auswertung der Signale der Sensoren 34 bzw. 36, gewonnen werden können.

Im Zeitbereich läßt sich beispielsweise die Kupplungsdrehzahl in Umdrehungen pro Minute ermitteln, indem man die Schraubenkopfpassierfrequenz, d.h. das Inverse des zeitlichen Abstands zwischen dem Durchgang zweier benachbarter Schraubenköpfe, durch die Anzahl der Schraubenköpfe 32 teilt und dann mal 60 nimmt. Diese Art der Drehzahlmessung ist üblicherweise sehr genau, da bei großen Kupplungen 18 mit beispielsweise 16 bis 96 Schraubenköpfen 32 gearbeitet wird. Die Genauigkeit der Drehzahlmessung kann gesteigert werden, indem man im spektralen Bereich arbeitet und Vielfache der Schraubenkopfpassierfrequenz für die Drehzahlberechnung verwendet.

In Fig. 4 ist ein Beispiel für aus den Zeitsignalen der Sensoren 34, 36 ausgewertet, Drehzahlabweichungen für 800 U/min gezeigt, wobei der Darstellung zu entnehmen ist, dass eine Drehschwingung mit 2,4 und 8 Hz überlagert ist, die zu einer Drehzahlschwankung von maximal ± 8 U/min führt. Die Drehzahlschwankungen lassen sich über Frequenzanalysen ermitteln, quantifizieren und überwachen. Dabei wirken überlagerte periodische Fremdschwingungen als Modulationen insbesondere um die Schraubenkopfpassierfrequenzen.

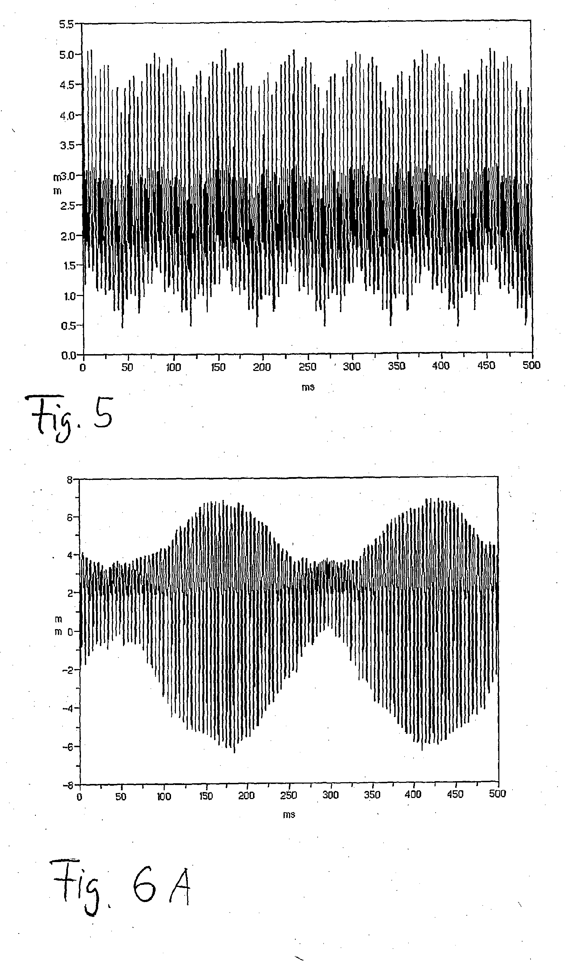

In Fig. 5 ist ein beispielhaftes Abstandssignal eines der beiden Sensoren 34, 36 im Zeitbereich gezeigt, wobei die Maxima den Abstand des Flansches 16 bzw. 26 vom Sensor 34 bzw. 36 in den Bereichen zwischen den Schraubenköpfen 32 widerspiegeln. Werden diese Maxima ausgewertet, können axiale Verlagerungen des Flansches 16 bzw. 26 und damit auch des entsprechenden Kupplungsflansches 20 bzw. 22 erfaßt und überwacht werden. Dies setzt natürlich voraus, dass der Meßbereich des Sensors 34, 36 bis auf den Flansch 16 bzw. 26 reicht.

Wenn man die Minima des Abstandssignals, d.h. die Abstände der Schraubenköpfe 32 beim Durchgang am Sensor 34, 36, auswertet, lassen sich z.B. gelockerte Schrauben 30 (in diesem Fall ist der Abstand des Schraubenkopfs 32 entsprechend verringert) oder Taumelschlag bzw. unzulässige Verformungen der Kupplungshälften messen und überwachen.

Aus einer spektralen Auswertung der Abstandssignale der Sensoren 34, 36 lassen sich z.B. Unwuchten erkennen, die sich in drehfrequenten Frequenzkomponenten in den zugehörigen Spektren zeigen, wozu die Amplituden der Spektren auszuwerten sind. Wenn auf die Kupplung 18 z.B. Schwingungen aus Verbrennungskraftmaschinen wirken, zeigen sich halbe Moden oder andere gaskraft- bzw. maschinenspezifische Frequenzen.

Zusätzliche Informationen kann man gewinnen, wenn eines der Markierungselemente, d.h. im vorliegenden Beispiel einer der Schraubenköpfe 32, so gestaltet ist, dass er im Abstandssignal individuell erkennbar ist. Dies kann beispielsweise dadurch realisiert werden, dass auf jeder Kupplungsseite einer der Schraubenköpfe 32 weiter hervorsteht als die anderen, so dass der Durchgang dieses Schraubenkopfs 32 als absolutes Minimum im Abstandssignal erkenntlich ist. Auf diese Weise kann im Zeitbereich der Signale eine örtliche Zuordnung von Ereignissen erfolgen. Dabei können beispielsweise durch die Methode der Zeitbereichsmittelung das Lockern von Schrauben 30 und/oder Taumelschläge bzw. Zwänge örtlich zugeordnet werden. Ferner erhält man dadurch ein eindeutiges Triggersignal für nachträgliche Phasenanalysen, beispielsweise bis hin zu Hochlauf-und Auslaufanalysen.

Aus einer zweikanaligen Bewertung der Abstandssignale, d.h. aus einem Vergleich der Zeitverläufe der Abstandssignale der Sensoren 34 und 36, lassen sich beispielsweise folgende Informationen ableiten.

Entstehen in der Kupplung 18 irreversible Verformungen, so verändert sich beim Vergleich der Ergebnisse unter Leerlast bzw. Last die Lage der Bezugsschrauben 30 auf beiden Kupplungsseiten zueinander. Das Maß der bleibenden Verdrehung läßt sich über den Vergleich mit dem ursprünglichen Kupplungszustand quantifizieren und über die beispielsweise an der Arbeitsmaschine 12 gemessene Betriebslast bewerten, und bei Überschreiten bestimmter Grenzwerte können Alarmmeldungen generiert werden.

Erhöht man das auf die Kupplung 18 wirkende Drehmoment, so erhöht sich der Verdrehwinkel bzw. die Torsionsverformung entsprechend. Dies führt im Abstandssignal zu einer entsprechenden Phasenverschiebung auf jeder Kupplungsseite, wobei sich aus dem Vergleich der Phasenverschiebung des antriebsseitigen Abstandssignals und des abtriebsseitigen Abstandssignals der aktuelle Verdrehwinkel ermitteln und überwachen läßt.

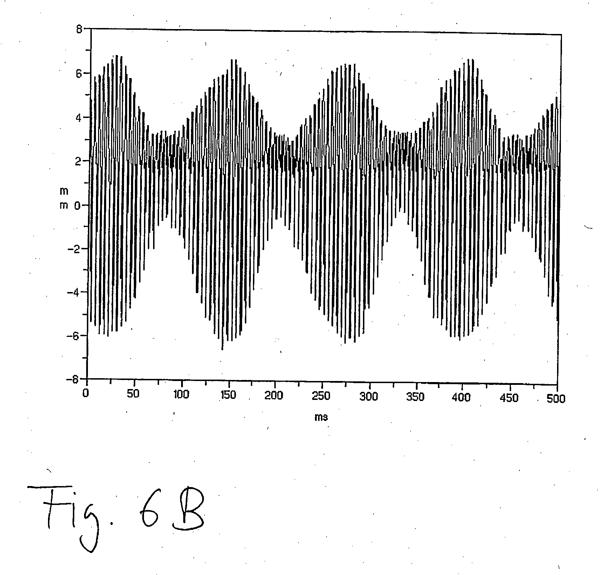

Wenn auf die Kupplung 18 Zwänge wirken oder in mehrsträngigen Kupplungen Zusatzbewegungen auftreten, lassen sich durch Hüllflächenbildung Zusatzbewegungen der Kupplung 18 einschätzen und überwachen. In Fign. 6A und 6B ist veranschaulicht, wie sich aus der Phasenverschiebung eingebrachte Drehschwingungen mit 4 und 8 Hz visualisieren lassen (siehe Fig. 6A bzw. 6B).

Wenn man im Frequenzbereich in den Frequenz- oder Ordnungsspektren die breitbandigen Resonanzanregungen des antriebsseitigen und des abtriebsseitigen Abstandssignals miteinander vergleicht, lassen sich Aussagen zu Eigenschwingungen der Kupplung 18 und zu anderen Zusatzschwingungen ableiten. Des weiteren lassen sich Auswirkungen von gefährlichen Eigenfrequenzen in der Kupplung 18 abschätzen und man kann beispielsweise zuordnen, ob die Schwingungen antriebsmaschinenseitig oder lastseitig höher sind. Damit wird auch eine Grundlage geschaffen, um weiterführende Simulationsberechnungen zu Belastungen in Antriebskomponenten auf der Basis von Simulationsmodellen zu integrieren.

Im folgenden soll die zweikanalige Bewertung der ermittelten Verdrehwinkelsignale diskutiert werden. Die Auswertung in der Auswerteeinheit 42 erfolgt vorzugsweise DSP (Digitaler Signalprozessor)-gestützt, um große Datenmengen verarbeiten und autark auswerten zu können. Durch digitale Nachbearbeitung (z.B. Differenzieren, Suche der lokalen Minima, Differenzbildung) lassen sich die gewonnen Abstandssignale der Sensoren 34, 36 direkt in quantitative Verdrehwinkelschwankungen der Kupplung 18 umwandeln. Damit kann auch geprüft werden, ob schwellende oder wechselnde Amplitudenverläufe vorliegen.

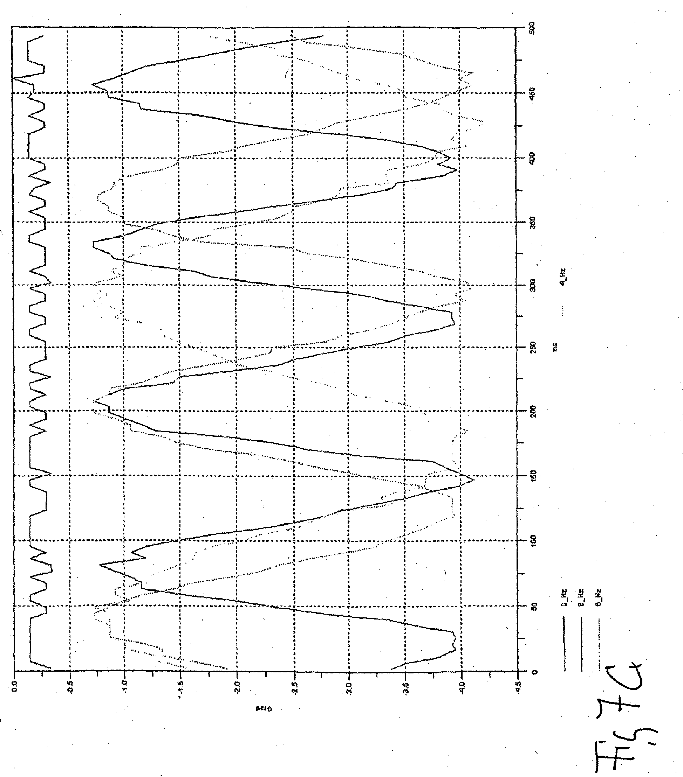

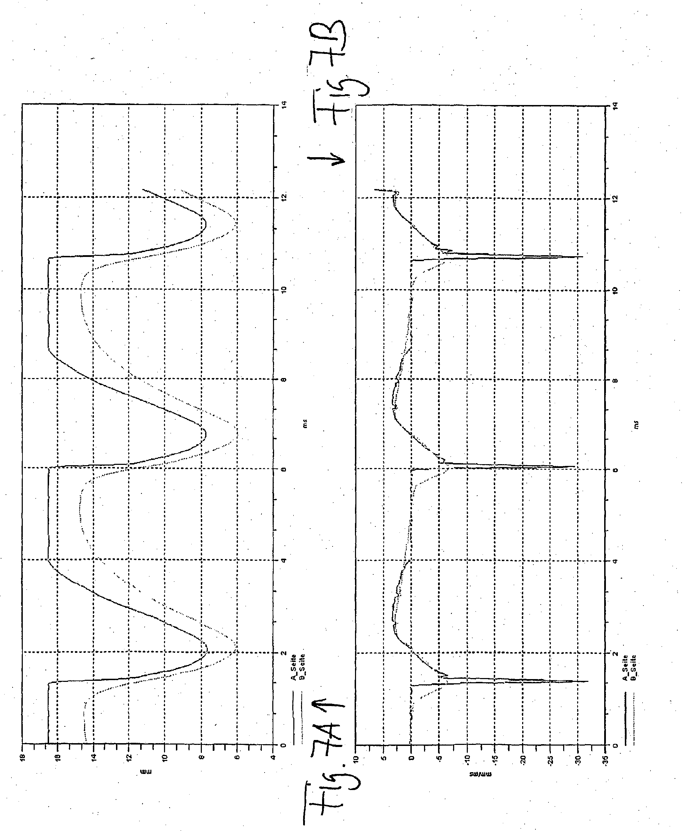

Dies sei nachfolgend anhand von in Fig. 7A bis 7C veranschaulichten Messungen mit überlagerten Drehwinkelschwankungen veranschaulicht. Fig. 7A zeigt die gemessenen Abstandssignale der Sensoren 34 bzw. 36, die in der Darstellung von Fig. 7B einmal differenziert wurden. In Fig. 7C ist der zeitliche Verlauf des berechneten Verdrehwinkels ohne Last (obere Kurve) und mit Lastschwankungen mit 4, 6 bzw. 8 Hz gezeigt. Es läßt sich bei allen drei Erregerfrequenzen ein harmonischer Verlauf der Verdrehwinkelschwankungen erkennen. Die Amplitudenhöhe bleibt in diesem Fall für alle drei Erregerfrequenzen gleich.

Auf der Basis solcher Auswertungen zum Verdrehwinkel lassen sich folgende weiterführende Informationen gewinnen.

So kann beispielsweise die dynamische Drehverformung der Kupplung 18 überwacht werden. Kommt es zu makroskopischem oder mikroskopischem Versagen innerhalb der Kupplung 18 oder ändern sich Temperaturen, Zusatzbeanspruchungen und viskoelastisches Verhalten in den Elastomerelementen der Kupplung 18, so ändern sich neben dem Verdrehwinkel auch die Kupplungssteifigkeiten. Aus der Erfassung des Verdrehwinkels und aus der gleichzeitigen Erfassung der Kupplungslast, z.B. durch Erfassen des Drehmoments der Arbeitsmaschine 12, können die Kupplungssteifigkeiten berechnet werden und als Zustandsparameter bei der Zustandsanalyse verwendet werden. Dies hat auch den Vorteil, dass man eindeutig zwischen kupplungsbedingten und lastbedingten Verdrehwinkelschwankungen unterscheiden kann.

Auch die stationäre Drehverformung durch die Last kann ermittelt werden. Kommt es infolge von Unwuchten und Ausrichtfehlem zu Radial- und Axialverlagerungen im Antriebsstrang 10, so verändern sich durch innere Walkarbeit in den Elastomerelementen der Kupplung 18 die Verdrehwinkelschwankungen, da sich die Kupplung mehr erwärmt und nicht mehr so gut ausgleichen und dämpfen kann. Mittels der vorliegenden Erfindung können die Auswirkungen solcher Störeinflüsse auch unter Betriebsbedingungen im Langzeiteinsatz erfasst, gespeichert und bei Ergreifen geeigneter Gegenmaßnahmen begrenzt werden. Dies gilt auch für ungünstige äußere Zusatzbeanspruchungen oder im Betrieb der Kupplung 18 unter erschwerten Umgebungsbedingungen. Auf diese Weise lassen sich auch teure Prüfstandsläufe einsparen.

Auch instationäre Verformungen durch die Last können erfaßt werden. Insbesondere beim Anfahren des Antriebsstrangs 10 kann es zu erhöhten Verdrehwinkeln oder gar zum Durchschlagen der Kupplung 18 kommen (so können bei Elastomerkupplungen beispielsweise Verdrehungen von bis zu 15 Grad auftreten). Solche Extremzustände können aufgezeichnet, gezählt und abgespeichert werden. Bei der Verwendung eines DSP-gestützten Systems lassen sich auch Ereignisse mit Vor- und Nachgeschichte sowie Lastkollektive aufzeichnen.

Auch dynamische Drehschwingungen und Eigenfrequenzen lassen sich erfassen und überwachen. Über Frequenzanalysen und Amplitudengänge können unzulässige Amplitudenvergrößerungen auch bei veränderten Beanspruchungsfrequenzen identifiziert und überwacht werden, wobei Überschreitungen gemeldet werden können. Fremdeinflüsse, Alterungsvorgänge und das Verschleißverhalten der Elastomerelemente 18 lassen sich so unter Einsatzbedingungen erfassen.

## Patentansprüche

1. Verfahren zum Überwachen eines Antriebsstrangs (10) mit zwei durch eine hochelastische Kupplung (18) verbundenen Wellenabschnitten (14, 24), wobei an beiden Seiten (20, 22) der Kupplung jeweils mittels mindestens eines induktiven oder elektromagnetischen Wegsensors (34, 36) der zeitliche Verlauf des Abstands zwischen dem jeweiligen Sensor und mindestens einem Markierungselement (32) an jeder Seite der Kupplung erfasst wird, und wobei der jeweils erfasste zeitliche Verlauf des Abstands zwischen dem jeweiligen Sensor und jedem Markierungselement an beiden Seiten der Kupplung ausgewertet und verglichen wird, um den zeitlichen Verlauf des Verdrehwinkels zwischen den Wellenabschnitten zwecks Überwachung des Zustands des Antriebsstrangs zu erfassen, wobei die Sensorsignale spektral analysiert werden, um die Kupplungsdrehzahl zu ermitteln, **dadurch gekennzeichnet, dass** die Sensorsignale spektral analysiert werden, um Schwingungen eines Antriebsmotors (12) zu ermitteln, der einen der Wellenabschnitte (14) antreibt, und/oder um Unwuchten des Antriebsstrangs (10) zu ermitteln, wobei zum Ermitteln von Unwuchten des Antriebsstrangs auch die Amplituden der Spektren ausgewertet werden.

2. Verfahren nach Anspruch 1, **dadurch gekennzeichnet, dass** die Kupplungsdrehzahl aus der Passierfrequenz der Markierungselemente (32) an dem jeweiligen Sensor (34, 36) und Vielfachen der Passierfrequenz ermittelt wird.

3. Verfahren gemäß einem der Ansprüche 1 oder 2, **dadurch gekennzeichnet, dass** die Sensorsignale spektral analysiert werden, um Schwankungen der Kupplungsdrehzahl zu ermitteln.

4. Verfahren gemäß einem der vorhergehenden Ansprüche, **dadurch gekennzeichnet, dass** die Kupplung (18) als Elastomerkupplung ausgebildet ist.

5. Verfahren gemäß einem der vorhergehenden Ansprüche, **dadurch gekennzeichnet, dass** es sich bei dem Antriebsstrang (10) um einen Teil eines Antriebs mit einer Verbrennungskraftmaschine oder eines drehzahlgeregelten hochdynamischen Generatorantriebs, insbesondere einer Windenergieanlage handelt.

6. Verfahren gemäß einem der vorhergehenden Ansprüche, **dadurch gekennzeichnet, dass** jeder Wegsensor (34, 36) einen Messarbeitsbereich von mindestens 10 mm aufweist.

7. Verfahren gemäß einem der vorhergehenden Ansprüche, **dadurch gekennzeichnet, dass** jeder Wegsensor (34, 36) eine Empfindlichkeit von mindestens 10µm für Frequenzen bis 1 kHz aufweist.

8. Verfahren gemäß einem der vorhergehenden Ansprüche, **dadurch gekennzeichnet, dass** jeder Wegsensor (34, 36) angeordnet ist, um den Abstand zwischen den Sensor und dem jeweiligen Markierungselement (32) in axialer Richtung zu erfassen.

9. Verfahren gemäß Anspruch 8, **dadurch gekennzeichnet, dass** die Markierungselemente (32) ringförmig angeordnet sind.

10. Verfahren gemäß Anspruch 9, **dadurch gekennzeichnet, dass** mindestes eines der Markierungelemente (32) hinsichtlich seines Sensorabstandssignals von den anderen Markierungelementen unterscheidbar ist, um eine örtliche Zuordnung von aus den Sensorsignalen abgeleiteten Phänomenen zu ermöglichen und/oder um ein Triggersiganl für Phasenanalysen zu liefern.

11. Verfahren gemäß Anspruch 9 oder 10, **dadurch gekennzeichnet, dass** es sich bei den Markierungselementen jeweils um die Köpfe (32) von axial angeordneten metallischen Verbindungselementen (30) zwischen dem jeweiligen Wellenabschnitt (14, 24) und der Kupplung (18) handelt.

12. Verfahren gemäß Anspruch 11, **dadurch gekennzeichnet, dass** es sich bei den Verbindungselementen um Schrauben (30) handelt.

13. Verfahren gemäß einem der vorhergehenden Ansprüche, **dadurch gekennzeichnet, dass** die auf die Kupplung (18) wirkende Belastung mit erfasst und bei der Auswertung der erfassten Verdrehwinkeländerungen der Kupplung berücksichtigt wird.

14. Verfahren gemäß Anspruch 13, **dadurch gekennzeichnet, dass** aus dem auf die Kupplung (18) wirkenden erfassten Drehmoment und dem erfassten Verdrehwinkel der zeitliche Verlauf der Kupplungssteifigkeit ermittelt wird.

15. Verfahren gemäß einem der vorhergehenden Ansprüche, **dadurch gekennzeichnet, dass** an mindestens einer der Seiten (20, 22) der Kupplung (18) aus den Sensorsignalen der zeitliche Verlauf der Kupplungsdrehzahl ermittelt wird.

16. Verfahren gemäß einem der Ansprüche 8 bis 12, **dadurch gekennzeichnet, dass** auf beiden Seiten (16, 20, 22, 26) der Kupplung (18) der axiale Abstand zwischen dem Sensor (34, 36) und dem Kupplungsflansch erfasst wird und ausgewertet wird, um axiale Verlagerungen der Kupplung zu überwachen.

17. Verfahren gemäß einem der Ansprüche 8 bis 12, **dadurch gekennzeichnet, dass** die Maxima des Abstandssignals jedes Sensors (34, 36) ausgewertet werden, um axiale Verlagerungen der Kupplung (18) zu überwachen.

18. Verfahren gemäß einem der Ansprüche 8 bis 12, **dadurch gekennzeichnet, dass** die Minima des Abstandssignals jedes Sensors (34, 36) ausgewertet werden, um gelockerte Schrauben (30), Taumelschlag und/oder unzulässige Verformungen der Kupplung (18) zu erfassen.

19. Verfahren gemäß Anspruch 12, **dadurch gekennzeichnet, dass** eine der Schrauben (30) axial vorsteht, um eine örtliche Zuordnung der gelockerten Schrauben, Taumelschläge und/oder unzulässigen Verformungen der Kupplung (18) zu ermöglichen.

20. Verfahren gemäß einem der vorhergehenden Ansprüche, **dadurch gekennzeichnet, dass** die Phasenlage der Sensorsignale zwischen den beiden Seiten (20, 22) der Kupplung (18) verglichen wird, um den aktuellen Verdrehwinkel der Kupplung zu erfassen.

21. Verfahren gemäß Anspruch 20, **dadurch gekennzeichnet, dass** die jeweilige Phasenverschiebung der Sensorsignale auf beiden Seiten (20, 22) der Kupplung (18) aufgrund des aktuell auf die Kupplung wirkenden Drehmoments bzgl. der lastfreien Kupplung ausgewertet wird, um den aktuellen Verdrehwinkel der Kupplung zu erfassen.

22. Verfahren gemäß einem der Ansprüche 13 und 14, **dadurch gekennzeichnet, dass** der erfasste Verdrehwinkel der Kupplung (18) über einen Zeitraum unter Berücksichtigung des auf die Kupplung wirkenden Drehmoments ausgewertet wird, um irreversible Drehverformungen der Kupplung zu ermitteln.

23. Verfahren gemäß einem der Ansprüche 13, 14 und 19, **dadurch gekennzeichnet, dass** ein Alarmsignal ausgegeben wird, wenn der erfasste aktuelle Verdrehwinkel in Abgängigkeit von dem auf die Kupplung (18) wirkenden Drehmoment einen vorgegebenen Schwellwert überschreitet.

24. Verfahren gemäß einem der vorhergehenden Ansprüche, **dadurch gekennzeichnet, dass** die Sensorsignale auf beiden Kupplungsseiten (20, 22) spektral analysiert und in den Frequenz- oder Ordnungsspektren die breitbandigen Resonanzanregungen auf beiden Kupplungsseiten miteinander verglichen werden, um Eigenschwingungen und andere Zusatzschwingungen der Kupplung (18) zu erfassen.

25. Verfahren gemäß einem der vorhergehenden Ansprüche, **dadurch gekennzeichnet, dass** aus den Sensorsignalen ein Phasenverschiebungssignal gebildet wird und das Phasenverschiebungssignal einer Hüllflächenbildung unterworfen wird, um Zusatzbewegungen der Kupplung (18) zu ermitteln.

26. Verfahren gemäß einem der vorhergehenden Ansprüche, **dadurch gekennzeichnet, dass** der zeitliche Verlauf des Verdrehwinkels zwischen den Wellenabschnitten permanent erfasst wird.

27. Vorrichtung zum Überwachen eines Antriebsstrangs (10) mit zwei durch eine hochelastische Kupplung (18) verbundenen Wellenabschnitten (14, 24), wobei an beiden Seiten (20, 22) der Kupplung jeweils mindestens eine induktiver oder elektromagnetischer Wegsensor (34, 36) vorgesehen ist, um den zeitlichen Verlauf des Abstands zwischen dem jeweiligen Sensor und mindestens einem Markierungselement (32) an jeder Seite der Kupplung zu erfassen, und wobei eine Auswerteeinheit (44) vorgesehen ist, um den jeweils erfassten zeitlichen Verlauf des Abstands zwischen dem jeweiligen Sensor und jedem Markierungselement an beiden Seiten der Kupplung auszuwerten und zu vergleichen, um den zeitlichen Verlauf des Verdrehwinkels zwischen den Wellenabschnitten zwecks Überwachung des Zustands des Antriebsstrangs zu erfassen, die Auswerteeinheit ausgebildet ist, um eine spektrale Analyse der Sensorsignale vorzunehmen, um die Kupplungsdrehzahl zu ermitteln, **dadurch gekennzeichnet, dass** die Auswerteeinheit ausgebildet ist, um die Sensorsignale spektral zu analysieren, um Schwingungen eines Antriebsmotors (12) zu ermitteln, der einen der Wellenabschnitte (14) antreibt, und/oder um Unwuchten des Antriebsstrangs (10) zu ermitteln, wobei zum Ermitteln von Unwuchten des Antriebsstrangs um auch die Amplituden der Spektren ausgewertet werden.

## Claims

1. Method for monitoring a drive train (10) having two shaft sections (14, 24) connected by a highly elastic coupling (18), on both sides (20, 22) of the coupling, in each case by means of at least one inductive or electromagnetic displacement sensor (34, 36), the variation over time of the distance between the respective sensor and at least one marking element (32) on each side of the coupling being measured, and the respectively measured variation over time of the distance between the respective sensor and each marking element on both sides of the coupling being evaluated and compared in order to measure the variation over time of the distortion angle between the shaft sections for the purpose of monitoring the condition of the drive train, the sensor signals being analysed spectrally in order to determine the coupling rotational speed, **characterized in that** the sensor signals are analysed spectrally in order to determine oscillations of a drive motor (12) which drives one of the shaft sections (14) and/or in order to determine unbalances in the drive train (10), the amplitudes of the spectra also being evaluated in order to determine unbalances in the drive train.

2. Method according to Claim 1, **characterized in that** the coupling rotational speed is determined from the passage frequency of the marking elements (32) at the respective sensor (34, 36) and multiples of the passage frequency.

3. Method according to either of Claims 1 and 2, **characterized in that** the sensor signals are analysed spectrally in order to determine fluctuations in the coupling rotational speed.

4. Method according to one of the preceding claims, **characterized in that** the coupling (18) is formed as an elastomer coupling.

5. Method according to one of the preceding claims, **characterized in that** the drive train (10) is part of a drive comprising an internal combustion engine or a controlled-speed highly dynamic generator drive, in particular a wind power plant.

6. Method according to one of the preceding claims, **characterized in that** each displacement sensor (34, 36) has a measurement working range of at least 10 mm.

7. Method according to one of the preceding claims, **characterized in that** each displacement sensor (34, 36) has a sensitivity of at least 10 µm for frequencies up to 1 kHz.

8. Method according to one of the preceding claims, **characterized in that** each displacement sensor (34, 36) is arranged to measure the distance between the sensor and the respective marking element (32) in the axial direction.

9. Method according to Claim 8, **characterized in that** the marking elements (32) are arranged in the form of a ring.

10. Method according to Claim 9, **characterized in that** at least one of the marking elements (32) can be distinguished from the other marking elements with regard to its sensor distance signal, in order to permit a local assignment of phenomena derived from the sensor signals and/or in order to supply a trigger signal for the phase analyses.

11. Method according to Claim 9 or 10, **characterized in that** the marking elements are respectively the heads (32) of axially arranged metallic connecting elements (30) between the respective shaft section (14, 24) and the coupling (18).

12. Method according to Claim 11, **characterized in that** the connecting elements are screws (30).

13. Method according to one of the preceding claims, **characterized in that** the loading acting on the coupling (18) is also measured and taken into account when evaluating the measured distortion angle changes of the coupling.

14. Method according to Claim 13, **characterized in that** the variation over time of the coupling rigidity is determined from the measured torque acting on the coupling (18) and the measured distortion angle.

15. Method according to one of the preceding claims, **characterized in that**, on at least one of the sides (20, 22) of the coupling (18), the variation over time of the coupling rotational speed is determined from the sensor signals.

16. Method according to one of Claims 8 to 12, **characterized in that**, on both sides (16, 20, 22, 26) of the coupling (18), the axial distance between the sensor (34, 36) and the coupling flange is measured and evaluated in order to monitor axial displacements of the coupling.

17. Method according to one of Claims 8 to 12, **characterized in that** the maxima of the distance signal from each sensor (34, 36) are evaluated in order to monitor axial displacements of the coupling (18).

18. Method according to one of Claims 8 to 12, **characterized in that** the minima of the distance signal from each sensor (34, 36) are evaluated in order to detect loosened screws (30), tumbling eccentricity and/or impermissible deformations of the coupling (18).

19. Method according to Claim 12, **characterized in that** one of the screws (30) projects axially in order to permit a local assignment of the loosened screws, tumbling eccentricities and/or impermissible deformations of the coupling (18).

20. Method according to one of the preceding claims, **characterized in that** the phase angle of the sensor signals between the two sides (20, 22) of the coupling (18) is compared in order to measure the current distortion angle of the coupling.

21. Method according to Claim 20, **characterized in that** the respective phase shift of the sensor signals on the two sides (20, 22) of the coupling (18) is evaluated on the basis of the torque currently acting on the coupling with respect to the load-free coupling, in order to measure the current distortion angle of the coupling.

22. Method according to either of Claims 13 and 14, **characterized in that** the measured distortion angle of the coupling (18) is evaluated over a time period while taking the torque acting on the coupling into account, in order to determine irreversible rotational deformations of the coupling.

23. Method according to one of Claims 13, 14 and 19, **characterized in that** an alarm signal is output if the measured current distortion angle, as a function of the torque acting on the coupling (18), exceeds a predefined threshold value.

24. Method according to one of the preceding claims, **characterized in that** the sensor signals on both coupling sides (20, 22) are analysed spectrally and, in the frequency or order spectra, the broadband resonance excitations on the two coupling sides are compared with each other in order to detect natural oscillations and other additional oscillations of the coupling (18).

25. Method according to one of the preceding claims, **characterized in that** a phase shift signal is formed from the sensor signals and the phase shift signal is subjected to enveloping surface formation in order to determine additional movements of the coupling (18).

26. Method according to one of the preceding claims, **characterized in that** the variation over time of the distortion angle between the shaft sections is measured continuously.

27. Device for monitoring a drive train (10) having two shaft sections (14, 24) connected by a highly elastic coupling (18), on both sides (20, 22) of the coupling in each case at least one inductive or electromagnetic displacement sensor (34, 36) being provided in order to measure the variation over time of the distance between the respective sensor and at least one marking element (32) on each side of the coupling, and an evaluation unit (44) being provided in order to evaluate and compare the respectively measured variation over time of the distance between the respective sensor and each marking element on the two sides of the coupling, in order to measure the variation over time of the distortion angle between the shaft sections for the purpose of monitoring the condition of the drive train, the evaluation unit being designed to perform a spectral analysis of the sensor signals in order to determine the coupling rotational speed, **characterized in that** the evaluation unit is designed to analyse the sensor signals spectrally in order to determine oscillations of a drive motor (12) which drives one of the shaft sections (14) and/or to determine unbalances in the drive train (10), the amplitudes of the spectra also being evaluated in order to determine unbalances in the drive train.

## Revendications

1. Procédé pour surveiller une chaîne cinématique (10) avec deux portions d'arbre (14, 24) reliées par un accouplement très élastique (18), dans lequel sur les deux côtés (20, 22) de l'accouplement, le cours temporel de l'espacement entre le capteur respectif et au moins un élément de marquage (32) sur chaque côté de l'accouplement est détecté respectivement au moyen d'au moins un capteur de course (34, 36) inductif ou électromagnétique, et dans lequel le cours temporel respectivement détecté de l'espacement entre le capteur respectif et chaque élément de marquage des deux côtés de l'accouplement est évalué et comparé, afin de détecter le cours temporel de l'angle de torsion entre les portions d'arbre à des fins de surveillance de l'état de la chaîne cinématique, dans lequel les signaux de capteur sont analysés spectralement, afin de déterminer la vitesse de rotation de l'accouplement, **caractérisé en ce que** les signaux de capteur sont analysés spectralement, afin de déterminer les vibrations d'un moteur d'entraînement (12), qui entraîne une des portions d'arbre (14), et/ou afin de déterminer l'équilibrage de la chaîne cinématique (10), dans lequel les amplitudes des spectres sont aussi évaluées afin de déterminer l'équilibrage de la chaîne cinématique.

2. Procédé selon la revendication 1, **caractérisé en ce que** la vitesse de rotation d'accouplement est déterminée d'après la fréquence de passage des éléments de marquage (32) sur le capteur respectif (34, 36) et des multiples de la fréquence de passage.

3. Procédé selon une des revendications 1 ou 2, **caractérisé en ce que** les signaux de capteur sont analysés spectralement, afin de déterminer les fluctuations de la vitesse de rotation d'accouplement.

4. Procédé selon une des revendications précédentes, **caractérisé en ce que** l'accouplement (18) est conçu comme un accouplement en élastomère.

5. Procédé selon une des revendications précédentes, **caractérisé en ce que** la chaîne cinématique (10) consiste en une partie d'un entraînement avec un moteur à combustion interne ou d'un entraînement de générateur très dynamique à vitesse de rotation régulée, notamment d'une installation d'énergie éolienne.

6. Procédé selon une des revendications précédentes, **caractérisé en ce que** chaque capteur de course (34, 36) présente une plage de travail de mesure d'au moins 10 mm.

7. Procédé selon une des revendications précédentes, **caractérisé en ce que** chaque capteur de course (34, 36) présente une sensibilité d'au moins 10µm pour des fréquences allant jusqu'à 1 kHz.

8. Procédé selon une des revendications précédentes, **caractérisé en ce que** chaque capteur de course (34, 36) est disposé afin de détecter l'espacement entre le capteur et l'élément de marquage (32) respectif dans la direction axiale.

9. Procédé selon la revendication 8, **caractérisé en ce que** les éléments de marquage (32) sont disposés en forme d'anneau.

10. Procédé selon la revendication 9, **caractérisé en ce qu'**au moins un des éléments de marquage (32) est différenciable en ce qui concerne son signal d'espacement de capteur des autres éléments de marquage, afin de permettre une coordination locale des phénomènes déduits des signaux de capteur et/ou délivrer un signal déclencheur pour des analyses de phase.

11. Procédé selon les revendications 9 ou 10, **caractérisé en ce que** les éléments de marquage consistent respectivement en têtes (32) d'éléments de liaison (30) métalliques disposés axialement entre la portion d'arbre respective (14, 24) et l'accouplement (18).

12. Procédé selon la revendication 11, **caractérisé en ce que** les éléments de liaison consistent en vis (30).

13. Procédé selon une des revendications précédentes, **caractérisé en ce que** la charge agissant sur l'accouplement (18) est détectée et est prise en compte lors de l'évaluation des variations d'angle de torsion de l'accouplement détectées.

14. Procédé selon la revendication 13, **caractérisé en ce que** d'après le couple de rotation détecté agissant sur l'accouplement (18) et l'angle de torsion détecté, le cours temporel de la rigidité d'accouplement est déterminé.

15. Procédé selon une des revendications précédentes, **caractérisé en ce que** sur au moins un des côtés (20, 22) de l'accouplement (18) d'après les signaux de capteur, le cours temporel de la vitesse de rotation de l'accouplement est déterminé.

16. Procédé selon une des revendications 8 à 12, **caractérisé en ce que** sur les deux côtés (16, 20, 22, 26) de l'accouplement (18) l'espacement axial entre le capteur (34, 36) et la bride d'accouplement est détecté et évalué, afin de surveiller les déplacements axiaux de l'accouplement.

17. Procédé selon une des revendications 8 à 12, **caractérisé en ce que** les valeurs maximales du signal d'espacement de chaque capteur (34, 36) sont évaluées, afin de surveiller les déplacements axiaux de l'accouplement (18).

18. Procédé selon une des revendications 8 à 12, **caractérisé en ce que** les valeurs minimales du signal d'espacement de chaque capteur (34, 36) sont évaluées, afin de détecter les vis (30) desserrées, la chasse et/ou les déformations non autorisées de l'accouplement (18).

19. Procédé selon la revendication 12, **caractérisé en ce qu'**une des vis (30) dépasse en saillie axialement, afin de permettre une coordination locale des vis desserrées, des chasses et/ou des déformations non autorisées de l'accouplement (18).

20. Procédé selon une des revendications précédentes, **caractérisé en ce que** la position de phase des signaux de capteur entre les deux côtés (20, 22) de l'accouplement (18) est comparée, afin de détecter l'angle de torsion actuel de l'accouplement.

21. Procédé selon la revendication 20, **caractérisé en ce que** le décalage de phase respectif des signaux de capteur sur les deux côtés (20, 22) de l'accouplement (18) est évalué sur la base du couple de rotation agissant actuellement sur l'accouplement, respectivement de l'accouplement exempt de charge, afin de détecter l'angle de torsion actuel de l'accouplement.

22. Procédé selon une des revendications 13 et 14, **caractérisé en ce que** l'angle de torsion détecté de l'accouplement (18) est évalué sur une plage de temps en tenant compte du couple de rotation agissant sur l'accouplement, afin de déterminer les déformations en rotation irréversibles de l'accouplement.

23. Procédé selon une des revendications 13, 14 et 19, **caractérisé en ce qu'**un signal d'alarme est émis, quand l'angle de torsion actuel détecté en fonction du couple de rotation agissant sur l'accouplement (18) dépasse une valeur de seuil prescrite.

24. Procédé selon une des revendications précédentes, **caractérisé en ce que** les signaux de capteur sont analysés spectralement sur les deux côtés d'accouplement (20, 22) et dans les spectres de fréquence ou d'ordre les excitations de résonance à large bande sont comparées les unes aux autres sur les deux côtés d'accouplement, afin de détecter les vibrations propres et d'autres vibrations supplémentaires de l'accouplement (18).

25. Procédé selon une des revendications précédentes, **caractérisé en ce qu'**un signal de décalage de phase est formé d'après les signaux de capteur et le signal de décalage de phase est soumis à une formation de surface d'enveloppe, afin de déterminer les mouvements supplémentaires de l'accouplement (18).

26. Procédé selon une des revendications précédentes, **caractérisé en ce que** le cours temporel de l'angle de torsion est détecté en permanence entre les portions d'arbre.

27. Dispositif pour surveiller une chaîne cinématique (10) avec deux portions d'arbre (14, 24) reliées par un accouplement très élastique (18), dans lequel sur les deux côtés (20, 22) de l'accouplement, respectivement au moins un capteur de course (34, 36) inductif ou électromagnétique est prévu, afin de détecter le cours temporel de l'espacement entre le capteur respectif et au moins un élément de marquage (32) sur chaque côté de l'accouplement, et dans lequel une unité d'évaluation (44) est prévue, afin d'évaluer et comparer le cours temporel respectivement détecté de l'espacement entre le capteur respectif et chaque élément de marquage sur les deux côtés de l'accouplement, afin de détecter le cours temporel de l'angle de torsion entre les portions d'arbre à des fins de surveillance de l'état de la chaîne cinématique, l'unité d'évaluation est conçue afin d'entreprendre une analyse spectrale des signaux de capteur, afin de déterminer la vitesse de rotation de l'accouplement, **caractérisé en ce que** l'unité d'évaluation est conçue afin d'analyser spectralement les signaux de capteur, afin de déterminer les vibrations d'un moteur d'entraînement (12), qui entraîne une des portions d'arbre (14), et/ou afin de déterminer l'équilibrage de la chaîne cinématique (10), dans lequel afin de déterminer l'équilibrage de la chaîne cinématique les amplitudes des spectres sont aussi évaluées.
